# FASCICULE DE BREVET EUROPEEN

(11) **EP 3 114 379 B1**
(45) Date de publication et mention de la délivrance du brevet: **08.07.2020**
(21) Numéro de dépôt: 15709301.4
(22) Date de dépôt: 23.02.2015
(51) Int. Cl.: F16J 15/34

(54) **DISPOSITIF D'ETANCHEITE POUR ARBRE TOURNANT**
VORRICHTUNG ZUR VERSIEGELUNG EINER DREHBAREN WELLE
DEVICE FOR SEALING A ROTATABLE SHAFT

(30) Priorité: 03.03.2014 FR 1451710
(43) Date de publication de la demande: 11.01.2017
(73) Titulaire: Valeo Systèmes de Contrôle Moteur, 95800 Cergy Saint Christophe (FR)
(72) Inventeur: MARTIN, Nicolas, F-78600 Maisonslafitte (FR); LEBRASSEUR, Patrick, F-60240 Montagny en Vexin (FR); LALLEMANT, Mathieu, F-78600 Maisons-Laffitte (FR); GIRAUD, Franck, 95800 Cergy Saint-Christophe (FR)
(74) Mandataire: Garcia, Christine
(86) Numéro de dépôt international: PCT/FR2015/050431
(87) Numéro de publication internationale: WO 2015/132502

(56) Documents cités:
- EP-A2- 2 420 649
- US-A- 5 251 914
- US-A1- 2002 135 134

## Description

La présente invention concerne le domaine des systèmes d'étanchéité, et plus particulièrement un système d'étanchéité pour arbre tournant.

La présente invention s'applique par exemple aux arbres tournants des compresseurs électriques. Un compresseur électrique est un dispositif utilisé pour suralimenter un moteur thermique et fonctionnant avec un moteur électrique.

Un compresseur électrique comporte un arbre pouvant tourner jusqu'à 300000 tours par minutes qui s'étend dans au moins deux compartiments. Le premier compartiment peut contenir des moyens de guidage en rotation et/ou des moyens d'entrainement de l'arbre. Dans un compresseur électrique, le premier compartiment peut contenir un moteur électrique et des éléments de guidage en rotation tels que des roulements à billes. Le deuxième compartiment peut contenir la roue du compresseur connectée à l'extrémité de l'arbre.

Dans un tel dispositif il est nécessaire qu'une étanchéité maximale soit maintenue au niveau de l'arbre entre le premier et le deuxième compartiment. En effet, des polluants du moteur, tels que l'huile, provenant du deuxième compartiment, peuvent pénétrer dans le premier compartiment au niveau de la portion de l'arbre entre les deux compartiments.

Actuellement, pour éviter que des polluants ne pénètrent dans le premier compartiment, un système d'étanchéité est disposé au niveau de la portion de l'arbre entre les deux compartiments. Ce système est composé d'un joint disposé dans un évidement formé directement dans l'arbre. Ce système est maintenu plaqué sur une face latérale de l'évidement en direction du premier compartiment sous l'effet de la pression du compresseur. Cependant, cette pression d'une valeur de la pression atmosphérique peut varier jusqu'à une valeur de pression d'environ la pression atmosphérique plus 0,4 MPa. Ces variations de pression peuvent avoir un impact sur le plaquage du système d'étanchéité et donc sur l'étanchéité dans le compresseur mécanique ou électrique.

La géométrie de l'évidement peut également avoir un impact sur l'étanchéité. En effet, la paroi verticale de l'évidement, contre laquelle est plaqué le joint, peut ne pas être parfaitement lisse, ou être voilée. Lorsque l'arbre tourne, le joint n'est ainsi pas toujours en contact optimal avec la paroi latérale de l'évidement.

Les variations de pression et le problème de voilage de l'évidement peuvent dans certains cas se cumuler et provoquer des problèmes d'étanchéité encore plus importants.

La présente invention a donc pour objet de pallier un ou plusieurs des inconvénients des dispositifs de l'art antérieur en proposant un arbre tournant dont le système d'étanchéité est amélioré et permet ainsi d'éviter la pollution du premier compartiment, et notamment du moteur électrique.

Pour cela la présente invention propose, un système d'étanchéité, pour arbre tournant de compresseur électrique, l'arbre étant relié à au moins un compartiment, l'arbre comportant deux joints d'étanchéité disposés dans un évidement de l'arbre et un dispositif de maintien des joints contre au moins une paroi de l'évidement, pour maintenir l'étanchéité du compartiment.

L'invention permet ainsi de maintenir l'étanchéité, vis-à-vis de polluants tel que de l'huile, des gaz, ou d'autres liquides ou particules, dans le premier compartiment, et par exemple au niveau du moteur électrique pour un compresseur électrique. En effet, au niveau de la jonction entre l'arbre et un premier compartiment, en absence de système d'étanchéité, les polluants passent dans le compartiment et endommagent les éléments s'y trouvant. Le dispositif de maintien permet au joint de rester plaqué contre la paroi de l'évidement même lors de variation de pression.

Selon un mode de réalisation de l'invention, le compresseur est un compresseur électrique équipé d'un moteur à reluctance variable.

Selon un mode de réalisation de l'invention, le dispositif de maintien est formé par une pièce élastique longitudinalement disposée dans l'évidement, selon l'axe longitudinal de l'arbre, de façon à se déformer selon l'axe longitudinale de l'arbre.

La présence d'une pièce élastique permet de maintenir les joints plaqués contre la paroi de l'évidement tout en gardant une certaine souplesse. En effet, l'élasticité de la pièce permet de pallier les jeux et autres contraintes auxquels les éléments du compresseur sont soumis.

Selon un mode de réalisation de l'invention, la pièce élastique est configurée pour que les efforts fournis par la pièce élastique soient ajustés de façon à empêcher le recul des joints sous l'effet des différences de pression.

Selon un mode de réalisation de l'invention, la pièce élastique est un ressort.

Selon un mode de réalisation de l'invention, le ressort est un ressort hélicoïdal ou un ressort en tôle.

Selon un mode de réalisation de l'invention, le joint est un segment élastique ouvert en forme d'anneau.

L'ouverture du joint permet son montage dans l'évidemment de l'arbre.

Selon un mode de réalisation de l'invention, le joint entoure l'arbre et est plaqué contre une paroi verticale de l'évidement.

Selon un mode de réalisation de l'invention, l'évidement est formé, directement dans l'arbre.

Ce mode de réalisation permet l'économie d'une pièce.

Selon un mode de réalisation de l'invention, l'évidement est formé par une pièce supplémentaire fixée à l'arbre.

Cette pièce supplémentaire permet d'adapter le système à différents arbres existants.

Selon un mode de réalisation de l'invention, la pièce supplémentaire a la forme d'une bague dans laquelle est creusé l'évidement.

Selon un mode de réalisation de l'invention, la pièce supplémentaire est formée en une seule partie ou en deux parties.

Selon un mode de réalisation de l'invention, les extrémités du ressort sont configurées pour coopérer avec les joints.

Selon un mode de réalisation de l'invention, le système comporte deux joints et les extrémités du ressort sont configurées pour empêcher un mouvement relatif des deux joints autour de l'axe de l'arbre.

L'invention concerne également un compresseur électrique équipé d'un système d'étanchéité selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la figure 1 est une représentation schématique d'une vue en coupe longitudinale d'un mode de réalisation d'un dispositif non couvert par l'invention,
- la figure 2 est une représentation schématique d'une vue de face d'un mode de réalisation d'un dispositif selon l'invention,
- la figure 3 est une représentation schématique d'une vue en coupe longitudinale du mode de réalisation d'un dispositif selon l'invention de la figure 2,
- la figure 4 est une représentation schématique d'une vue en perspective éclatée du mode de réalisation d'un dispositif selon l'invention de la figure 2,
- la figure 5 est une représentation schématique d'une vue de face d'un autre mode de réalisation d'un dispositif selon l'invention,
- la figure 6 est une représentation schématique d'une vue en perspective d'un élément du mode de réalisation du dispositif selon l'invention de la figure 5,
- la figure 7 est une représentation schématique d'une vue en perspective d'un élément d'un autre mode de réalisation du dispositif selon l'invention,
- la figure 8 est une représentation schématique d'une vue en coupe longitudinale d'un autre mode de réalisation du dispositif non couvert par l'invention.
- la figure 9 est une représentation schématique générale du système selon l'invention disposé entre deux compartiments.

La présente invention concerne un arbre tournant équipé d'un système d'étanchéité. Dans le cadre de l'invention, le système d'étanchéité est formé par deux joints associés à un dispositif de maintien de ces joints.

Selon un mode de réalisation de l'invention l'arbre tournant est un arbre pour compresseur électrique.

Dans le cadre de l'invention, on entend par compresseur électrique, un compresseur d'air, volumétrique ou non et par exemple centrifuge ou radial, entraîné par un moteur électrique, dans le but de suralimenter un moteur thermique.

Selon un mode de réalisation de l'invention, le moteur électrique du compresseur électrique est un moteur à courant continu ou alternatif, synchrone, ou tout type de moteur électrique du même type.

Plus précisément, selon un mode de réalisation de l'invention, le moteur électrique est un moteur à reluctance variable (également appelée machine SRM pour Switched Reluctance Motor selon la terminologie anglaise).

Dans la suite de la description, le terme compresseur signifie compresseur électrique, sauf précision complémentaire.

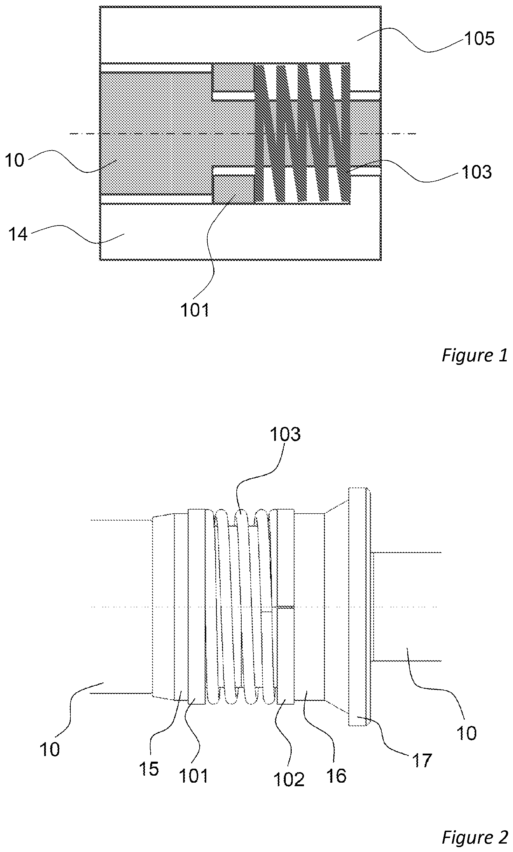

Comme cela est illustré sur les figures 2-5, l'arbre 10 est un arbre classique, longitudinal, de forme cylindrique.

L'arbre 10 tourne en général à une vitesse comprise entre 0 et 300000 tr/min et de préférence entre 0 et 100000 tr/min.

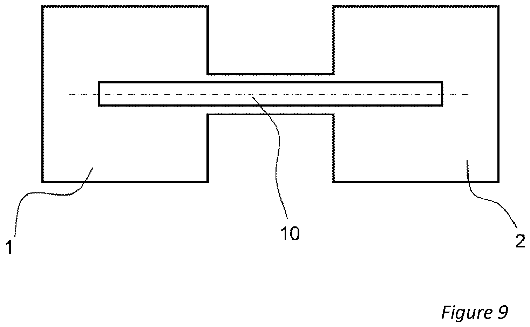

Comme illustré sur la figure 9, l'arbre 10 s'étend dans et entre au moins deux compartiments 1, 2. Plus précisément, une extrémité 12 de l'arbre débouche à l'intérieur d'un premier compartiment 1 du compresseur. Selon un mode de réalisation de l'invention, le premier compartiment 1 contient des moyens de guidage en rotation et/ou des moyens d'entrainement de l'arbre. Par exemple, pour un compresseur électrique, le premier compartiment 1 comporte un moteur électrique. L'autre extrémité 11 de l'arbre débouche à l'intérieur d'un deuxième compartiment 2 du compresseur. Selon un mode de réalisation de l'invention le deuxième compartiment 2 comporte la roue, non illustrée, du compresseur. L'arbre 10 est ainsi entrainé en rotation par les moyens d'entrainement disposés dans le premier compartiment 1, et entraine lui-même en rotation la roue du compresseur disposée dans le deuxième compartiment 2.

L'arbre 10 est disposé dans un alésage 133 d'une pièce fixe 14 du compresseur, formant le corps du compresseur. On entend par pièce fixe, une pièce qui n'est pas entrainée en rotation ou en translation.

L'arbre 10 comporte un évidement 13. On entend par évidement 13 une partie de l'arbre 10 de diamètre 110 réduit par rapport au diamètre 111 du reste de l'arbre.

Cet évidement comporte au moins une paroi 131, 132 verticale circulaire disposée du coté du premier compartiment 1 ou du coté du deuxième compartiment 2.

Une seule paroi verticale facilite le montage d'éléments supplémentaires sur l'arbre.

Selon un mode de réalisation du système selon l'invention, l'évidement 13 comporte deux parois 131, 132 verticales circulaires disposées respectivement du coté du premier compartiment 1 et du coté du deuxième compartiment 2.

Selon un mode de réalisation du dispositif selon l'invention, les parois 131, 132 sont perpendiculaires à l'axe X de l'arbre 10.

Selon un mode de réalisation du système illustré sur la figure 1, l'évidement 13 est formé, c'est-à-dire usiné, directement dans l'arbre 10.

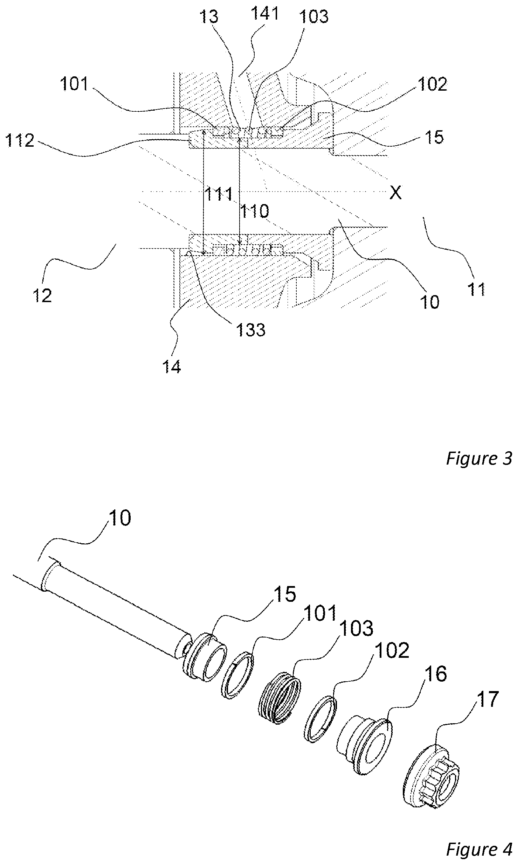

Selon un mode de réalisation du système de l'invention illustré au moins sur la figure 3, l'évidement 13 est formé par une pièce supplémentaire 15, 16 fixée à l'arbre 10. La pièce supplémentaire a la forme d'une bague dans laquelle est creusé l'évidement 13. Elle est disposée sur une paroi plane de l'arbre 10 ou dans un autre évidement 112 creusé dans l'arbre 10. Cet autre évidement 112 est configuré de façon à permettre une insertion facile de la pièce supplémentaire 15, 16 sur l'arbre 10.

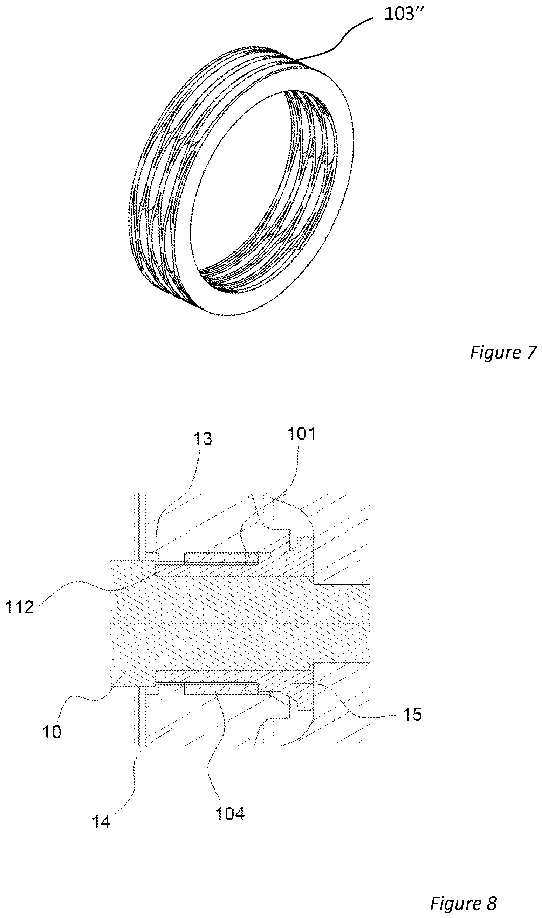

Selon un mode de réalisation du système illustré sur la figure 8, la pièce supplémentaire 15, 16 est formée en une seule partie 15 ou en deux parties 15, 16.

La pièce supplémentaire en deux parties peut permettre de faciliter le montage du système.

Selon une variante de l'invention, deux joints 101, 102 sont disposés dans l'évidement 13. Un premier joint 101 est plaqué contre la paroi 131 verticale disposée du coté premier compartiment 1 du compresseur, un deuxième joint 102 est plaqué contre la paroi 132 verticale disposée du coté du deuxième compartiment 2 du compresseur.

Selon un mode de réalisation de cette variante, le corps du compresseur comporte un trou d'évent 141 disposé de manière à déboucher dans un espace situé entre les deux joints 101, 102. Ce trou d'évent permet l'évacuation des polluants arrivant du deuxième compartiment 2. En effet, il est possible que des polluants franchissent le joint disposé du coté du deuxième compartiment 2. La présence du trou d'évent 141 évite ainsi l'accumulation des ces polluants entre les deux joints 101, 102.

Lorsque le dispositif comporte deux partie 15, 16, chacune des parties comporte un joint 101, 102. Ce mode de réalisation est illustré en détail sur la figure 4. Selon un mode de réalisation, l'ensemble peut être maintenu par une pièce 17.

Dans le cadre de l'invention, le joint 101, 102 est un segment élastique ouvert en forme d'anneau.

Selon un mode de réalisation de l'invention, le joint 101, 102 est de section rectangulaire. Dans le cadre de l'invention, le joint 101, 102 est disposé plaqué contre une paroi verticale 131, 132 et contre la paroi 133 intérieure de l'alésage de la pièce fixe 14 du compresseur. Ce sont ces deux zones de contact du joint 101, 102 qui permettent de créer l'étanchéité voulue.

Plus précisément, afin d'obtenir une étanchéité maximale vis-à-vis des polluants provenant du deuxième compartiment 2 du compresseur, le diamètre externe du joint 101, 102 est configuré de façon à ce que le joint 101, 102 coopère avec la face interne de l'alésage 133 ménagé dans le corps 14 du compresseur et une des faces latérales du joint 101, 102 coopère avec une paroi verticale de l'évidement 13. Les faces latérales du joint 101, 102 sont perpendiculaires à l'axe X de l'arbre 10.

Selon un mode de réalisation de l'invention, le joint est en acier, inox ou en fonte.

L'invention consiste à utiliser un dispositif de maintien du ou des joints, de façon à maintenir plaqué le ou les joints contre la paroi 131, 132 verticale de l'évidement 13. Ce dispositif de maintien est formé par une pièce 103, 104 élastique longitudinalement disposée dans l'évidement 13, selon l'axe longitudinal X de l'arbre 10. La pièce 103, 104 est disposée dans l'évidement 13 de façon à se déformer selon l'axe longitudinale X de l'arbre 10.

Dans la variante du système selon l'invention, comportant deux joints 101, 102, la pièce 103, 104 élastique est disposée entre les deux joints 101, 102. Une première extrémité de la pièce 103, 104 élastique prend appui sur le premier joint 101 et une deuxième extrémité de la pièce 103, 104 élastique prend appui sur le deuxième joint 102.

Dans le cadre de l'invention, la pièce 103, 104 élastique est configurée pour que les efforts fournis par la pièce 103, 104 élastique soient ajustés de façon à empêcher le recul du ou des joints 101, 102 sous l'effet des différences de pression. Les efforts doivent cependant être minimisés afin d'éviter une augmentation significative du couple de frottement au niveau de l'arbre.

Avantageusement, la pièce 103, 104 élastique permet de compenser l'usure des joints 101, 102 et de l'évidement 13. Elle peut ainsi également permettre de limiter les effets du voile sur l'évidement de l'arbre, en permettant un léger rotulage du joint.

Selon un mode de réalisation de l'invention, il est possible d'utiliser par exemple un effort légèrement supérieur à celui qui est engendré par la pression de l'air arrivant du deuxième compartiment.

Selon un mode de réalisation de l'invention, la pièce élastique est une pièce 104 de type élastomère.

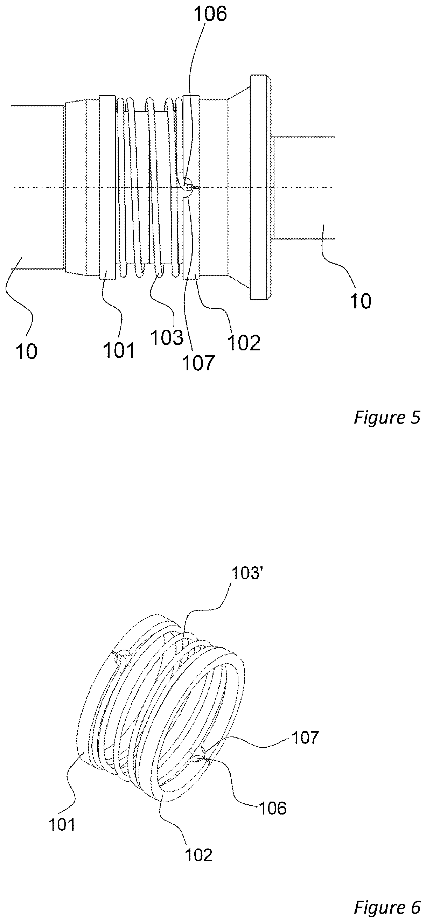

Selon un autre mode de réalisation de l'invention, la pièce élastique est un ressort 103 de fil, hélicoïdal, 103' illustré par exemple sur la figure 6 ou de tôle emboutie 103" illustrée sur la figure 7.

Selon un mode de réalisation de l'invention, les extrémités du ressort 103 sont configurées pour coopérer avec les joints 101, 102. Plus précisément, selon un mode de réalisation non illustrée, les extrémités du ressort sont meulées de façon à avoir une forme en biais, qui permet aux extrémités de reposer à plat sur le joint 101, 102. Selon un autre mode de réalisation de l'invention illustrée sur les figures 5 et 6, les extrémités 106 du ressort sont configurées pour coopérer avec une forme 107 aménagée dans les joints. Par exemple, les extrémités 106 du ressort sont recourbées et peuvent ainsi s'insérer dans des encoches 107 formées dans les joints.

Le système comporte deux joints 101, 102, les extrémités du ressort 103 sont configurées pour empêcher un mouvement relatif des deux joints 101, 102 l'un par rapport à l'autre autour de l'axe X de l'arbre 10

Le ressort 103 peut ainsi également remplir la fonction supplémentaire d'indexage angulaire des segments. En orientant la coupe des segments à 180°, on crée un labyrinthe, ce qui réduit la fuite par cette zone du segment.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Système d'étanchéité, pour arbre (10) tournant de compresseur électrique, le compresseur électrique étant un compresseur d'air, entraîné par un moteur électrique à reluctance variable, dans le but de suralimenter un moteur thermique, l'arbre (10) étant relié à au moins un compartiment (1, 2), l'arbre (10) comportant deux joints (101, 102) d'étanchéité disposés dans un évidement (13) de l'arbre (10) et un dispositif de maintien des joints (101, 102) contre au moins une paroi de l'évidement (13), pour maintenir l'étanchéité du compartiment,
charactérisé en ce que le dispositif de maintien est formé par un ressort (103) disposé dans l'évidement, selon l'axe longitudinal (X) de l'arbre (10), de façon à se déformer selon l'axe longitudinale (X) de l'arbre (10), les extrémités du ressort (103) étant meulées de façon à avoir une forme en biais, leur permettant de reposer à plat sur les joints (101, 102) ou étant configurées pour coopérer avec une forme (107) aménagée dans les joints, pour empêcher un mouvement relatif des deux joints (101, 102) autour de l'axe (X) de l'arbre (10), les extrémités du ressort sont configurées pour que les efforts fournis par le ressort soient ajustés de façon à empêcher le recul des joints (101, 102) sous l'effet des différences de pression.

2. Dispositif selon la revendication 1, dans lequel le ressort (103) est un ressort (103') hélicoïdal ou un ressort (103") en tôle.

3. Dispositif selon une des revendications 1 ou 2, dans lequel le joint (101, 102) est un segment élastique ouvert en forme d'anneau.

4. Dispositif selon une des revendications 1 à 3, dans lequel le joint (101, 102) entoure l'arbre et est plaqué contre une paroi (131, 132) verticale de l'évidement (13).

5. Dispositif selon une des revendications 1 à 4, dans lequel l'évidement (13) est formé, directement dans l'arbre (10).

6. Dispositif selon une des revendications 1 à 5, dans lequel l'évidement (13) est formé par une pièce supplémentaire (15, 16) fixée à l'arbre (10).

7. Dispositif selon la revendication 6, dans lequel la pièce supplémentaire (15, 16) à la forme d'une bague dans laquelle est creusé l'évidement (13).

8. Dispositif selon une des revendications 6 ou 7, dans lequel la pièce supplémentaire (15, 16) est formée en une seule partie (15) ou en deux parties (15, 16).

9. Dispositif selon une des revendications 5 et 7 à 8, dans lequel les extrémités du ressort (103) sont configurées pour coopérer avec les joints (101, 102).

10. Compresseur électrique équipé d'un système d'étanchéité selon une des revendications 1 à 9, le compresseur électrique étant un compresseur d'air, entraîné par un moteur électrique à reluctance variable, dans le but de suralimenter un moteur thermique.

## Patentansprüche

1. Abdichtungssystem für eine drehende Welle (10) eines elektrischen Kompressors, wobei der elektrische Kompressor ein Luftkompressor ist, der von einem Elektromotor mit variabler Reluktanz zu dem Zweck angetrieben wird, einen Verbrennungsmotor aufzuladen, wobei die Welle (10) mit wenigstens einem Raum (1, 2) verbunden ist, wobei die Welle (10) zwei Dichtungen (101, 102), die in einer Aussparung (13) der Welle (10) angeordnet sind, und eine Vorrichtung zum Halten der Dichtungen (101, 102) an wenigstens einer Wand der Aussparung (13) aufweist, um die Dichtigkeit des Raumes aufrechtzuerhalten,
**dadurch gekennzeichnet, dass** die Haltevorrichtung von einer Feder (103) gebildet wird, die in der Aussparung entlang der Längsachse (X) der Welle (10) so angeordnet ist, dass sie sich entlang der Längsachse (X) der Welle (10) verformt, wobei die Enden der Feder (103) so geschliffen sind, dass sie eine schräge Form haben, die ihnen ermöglicht, flach auf den Dichtungen (101, 102) zu liegen, oder dafür ausgelegt sind, mit einer in den Dichtungen ausgebildeten Form (107) zusammenzuwirken, um eine relative Bewegung der zwei Dichtungen (101, 102) um die Achse (X) der Welle (10) zu verhindern, wobei die Enden der Feder so gestaltet sind, dass die von der Feder ausgeübten Kräfte so angepasst werden, dass die Zurückbewegung der Dichtungen (101, 102) infolge der Druckunterschiede verhindert wird.

2. Vorrichtung nach Anspruch 1, wobei die Feder (103) eine Schraubenfeder (103') oder eine Blechfeder (103") ist.

3. Vorrichtung nach einem der Ansprüche 1 oder 2, wobei die Dichtung (101, 102) ein offenes elastisches Segment in Ringform ist.

4. Vorrichtung nach einem der Ansprüche 1 bis 3, wobei die Dichtung (101, 102) die Welle umgibt und an eine vertikale Wand (131, 132) der Aussparung (13) angedrückt wird.

5. Vorrichtung nach einem der Ansprüche 1 bis 4, wobei die Aussparung (13) direkt in der Welle (10) ausgebildet ist.

6. Vorrichtung nach einem der Ansprüche 1 bis 5, wobei die Aussparung (13) von einem zusätzlichen Teil (15, 16) gebildet wird, das an der Welle (10) befestigt ist.

7. Vorrichtung nach Anspruch 6, wobei das zusätzliche Teil (15, 16) die Form einer Hülse hat, in welche die Aussparung (13) eingearbeitet ist.

8. Vorrichtung nach einem der Ansprüche 6 oder 7, wobei das zusätzliche Teil (15, 16) als ein einstückiges Teil (15) oder aus zwei Teilstücken (15, 16) ausgebildet ist.

9. Vorrichtung nach einem der Ansprüche 5 und 7 bis 8, wobei die Enden der Feder (103) dafür ausgelegt sind, mit den Dichtungen (101, 102) zusammenzuwirken.

10. Elektrischer Kompressor, welcher mit einem Abdichtungssystem nach einem der Ansprüche 1 bis 9 ausgestattet ist, wobei der elektrische Kompressor ein Luftkompressor ist, der von einem Elektromotor mit variabler Reluktanz zu dem Zweck angetrieben wird, einen Verbrennungsmotor aufzuladen.

## Claims

1. Sealing system for a rotating shaft (10) of an electrical compressor, the electrical compressor being an air compressor, driven by a variable reluctance electric motor, in order to supercharge a heat engine, the shaft (10) being linked to at least one compartment (1, 2), the shaft (10) comprising two seals (101, 102) disposed in a recess (13) of the shaft (10) and a device for holding the seals (101, 102) against at least one wall of the recess (13), to maintain the seal-tightness of the compartment,
**characterized in that** the holding device is formed by a spring (103) disposed in the recess, along the longitudinal axis (X) of the shaft (10), so as to be deformed along the longitudinal axis (X) of the shaft (10), the ends of the spring (103) being ground so as to have a slanted shape, allowing them to rest flat on the seals (101, 102) or being configured to cooperate with a shape (107) formed in the seals, to prevent a relative movement of the two seals (101, 102) about the axis (X) of the shaft (10), the ends of the spring are configured for the efforts supplied by the spring to be adjusted so as to prevent the backward movement of the seals (101, 102) under the effect of the pressure differences.

2. Device according to Claim 1, wherein the spring (103) is a helical spring (103') or a plate spring (103").

3. Device according to one of Claims 1 and 2, wherein the seal (101, 102) is a ring-shaped open elastic segment.

4. Device according to one of Claims 1 to 3, wherein the seal (101, 102) encircles the shaft and is pressed against a vertical wall (131, 132) of the recess (13).

5. Device according to one of Claims 1 to 4, wherein the recess (13) is formed directly in the shaft (10).

6. Device according to one of Claims 1 to 5, wherein the recess (13) is formed by an additional piece (15, 16) fixed to the shaft (10) .

7. Device according to Claim 6, wherein the additional piece (15, 16) has the form of a ring in which the recess (13) is hollowed out.

8. Device according to one of Claims 6 and 7, wherein the additional piece (15, 16) is formed in a single part (15) or in two parts (15, 16).

9. Device according to one of Claims 5 and 7 to 8, wherein the ends of the spring (103) are configured to cooperate with the seals (101, 102).

10. Electrical compressor equipped with a sealing system according to one of Claims 1 to 9, the electrical compressor being an air compressor, driven by a variable reluctance electric motor, in order to supercharge a heat engine.
